# EUROPÄISCHE PATENTSCHRIFT

(11) **EP 1 990 127 B1**
(45) Veröffentlichungstag und Bekanntmachung des Hinweises auf die Patenterteilung: **27.12.2017**
(21) Anmeldenummer: 08006565.9
(22) Anmeldetag: 31.03.2008
(51) Int. Cl.: C21D 1/70, C21D 9/40, B23P 9/00, F16C 9/04, F16C 33/14, B23P 15/00, C21D 9/00

(54) **Verfahren zur Herstellung eines bruch- getrennten Bauteils, danach hergestelltes Bauteil sowie dessen Verwendung**
Method for manufacturing a fracture split component, component manufactured according to this method and its use
Procédé de fabrication d'un composant séparable par fracture, composant ainsi fabriqué et son utilisation

(30) Priorität: 09.05.2007 DE 102007021622
(43) Veröffentlichungstag der Anmeldung: 12.11.2008
(73) Patentinhaber: Bayerische Motoren Werke Aktiengesellschaft, 80809 München (DE)
(72) Erfinder: Mittrach, Jürgen, 85622 Feldkirchen (DE); Mäurer, Michael, 97616 Bad Neustadt (DE); Luchner, Clemens, 83236 Übersee (DE); Bonauer, Franz, 85716 Unterschleisheim (DE); Betzmeier, Christian, 82544 Egling (DE); Kreil, Franz, 85652 Pliening (DE)

(56) Entgegenhaltungen:
- EP-A1- 1 034 868
- EP-A2- 1 153 686
- DE-A1- 4 303 592
- US-A1- 2007 017 608

## Beschreibung

Die Erfindung betrifft ein Verfahren zur Herstellung eines bruchgetrennten Bauteils aus einem Kohlenstoffstahl umfassend eine zumindest bereichsweise Vergütung und/oder Beschichtung, wobei Spannungen eingebracht werden, ein danach hergestelltes Bauteil sowie dessen Verwendung.

Aus der DE 10 2004 018 921 A1 ist ein Verfahren zur Herstellung einer Pleuelstange mit einem einem Kolben zugeordneten ersten und einem einer Kurbelwelle zugeordneten zweiten Pleuelauge bekannt, wobei im ersten Pleuelauge eine Funktionsauflage durch Vergütung und im zweiten Pleuelauge eine Funktionsauflage durch Beschichtung gebildet wird. Dieses Verfahren ermöglicht eine einfache und günstige Herstellung einer Pleuelstange, wobei die Funktionsauflagen besonders hochwertig ausgebildet sind.

Insbesondere hinsichtlich der Vergütung und Beschichtung der Pleuelaugen sowie des Verfahrens zur Aufbringung der Funktionsauflagen wird auf die Anmeldung DE 10 2004 018 921 A1 Bezug genommen, deren Inhalt hiermit in die vorliegende Anmeldung aufgenommen wird. Für diese Merkmale kann Schutz begehrt werden, sie tragen zur Lösung der technischen Aufgabe, die der Erfindung liegt, bei.

Wenn allerdings ein derart vergütetes und/oder beschichtetes Pleuel bruchgetrennt wird, hat sich ergeben, dass die beim Vergüten und/oder Beschichten, insbesondere aufgrund der damit einhergehenden Martensitbildung eingebrachten Spannungen beim Bruchtrennen frei werden. Die unterschiedlichen Steifigkeiten der einzelnen Komponenten des bruchgetrennten Bauteils, des Pleuelfußes und des -deckels, bedingen ein unterschiedliches "Auffedern" nach dem Bruchtrennen. Die Komponenten sind daher ohne Richten oder Montagehilfen nicht mehr einwandfrei fügbar, sodass ein seitlicher Stoß entsteht, der Prozess nicht reproduzierbar ist und die Funktionssicherheit des Bauteils nicht gegeben ist.

Aus der US 2007/0017608 A1 ist ein Verfahren bekannt zum Runden und/oder Abflachen eines ringförmigen Bauteils aus einem Kohlenstoffstahl, das aufgrund ungleichmäßiger innerer Spannungen nicht mehr rund und/oder flach ist. Nach einer Wärmebehandlung werden unrunde und/öder unebene Abschnitte des Bauteils identifiziert und diese Abschnitte werden gerundet und/oder abgeflacht, indem in ausgewählten Abschnitten Druckspannungen eingeleitet oder abgebaut werden, um damit durch entsprechende Deformation des Bauteils ein Runden und/oder Abflachen zu bewirken.

Aufgabe der Erfindung ist es daher, ein eingangs genanntes Verfahren, welches eine einfache und günstige Herstellung eines Bauteils mit einer besonders hochwertig ausgebildeten Funktionsauflagen ermöglicht und bei dem zugleich eine höhere Lebensdauer sowie ein verringerter Verschleiß des Bauteils erreicht wird, indem Versetzungen der einzelnen Bauteilkomponenten vermieden werden bereitzustellen. Die Lösung der Aufgabe erfolgt mit einem Verfahren mit den Merkmalen des Patentanspruchs 1, wobei gemäß der zugrunde liegenden Idee eine partielle Wärmebehandlung vor dem Bruchtrennen zur gezielten Einbringung von Gegenspannungen oder Umformung vorgenommen wird, um ein Auffedern einzelner Komponenten des Bauteils nach dem Bruchtrennen zu beeinflussen. Mit der partiellen Wärmebehandlung wird das Auffedern der einzelnen Komponenten des Bauteils nach dem Bruchtrennen beeinflusst und zwar vorzugsweise derart, dass das Auffedern der Komponenten zumindest annähernd gleich ist, sodass ein reproduzierbares und präzises Fügen der bruchgetrennten Komponenten ohne Richten und/oder Montagehilfen möglich ist. Besonders bevorzugte Weiterbildungen und Ausgestaltungen der Erfindung sind Gegenstand der Unteransprüche.
Sehr von Vorteil ist es, wenn die partielle Wärmebehandlung in vorbestimmten Bereichen erfolgt, die auch als Gegenhärtezonen oder Umformzonen bezeichnet werden. Zweckmäßigerweise werden die vorbestimmten Bereiche rechnerisch anhand eines virtuellen Modells ermittelt, was den Vorteil bietet, dass keine aufwändigen Versuche mit Bauteilen, welche dann nicht mehr verwendbar sind, durchgeführt werden müssen. Ebenfalls kann es jedoch vorteilhaft sein, die vorbestimmten Bereiche empirisch mittels Bruchtrennen von Referenzbauteilen ohne partielle Wärmebehandlung bzw. Umformung vor oder nach dem Bruchtrennen zur gezielten Einbringung von Gegenspannungen ermittelt werden. Der besondere Vorteil liegt dabei in der besonderen Realitätsrelevanz der ermittelten Ergebnisse, indem gegenüber einer rein rechnerischen Ermittlung Modellierungsfehler ausgeschlossen sind. Vorzugsweise besteht das nach dem erfindungsgemäßen Verfahren hergestellte Bauteil im Wesentlichen aus einem Kohlenstoffstahl mit einem Kohlenstoffgehalt 0,2 ≤ C ≤ 0,95 Gew.-%, insbesondere 0,35 ≤ C ≤ 0,8 Gew.-%. Besonders vorteilhaft ist es, wenn das Bauteil als Pleuel einer Brennkraftmaschine oder Lager einer Welle, insbesondere Kurbelwelle, Nockenwelle oder Zwischenwelle, einer Brennkraftmaschine, verwendet wird.

Nachfolgend werden besonders zu bevorzugende Weiterbildungen des erfindungsgemäßen Verfahrens sowie Ausführungsbeispiele des erfindungsgemäßen Bauteils und dessen Verwendung unter Bezugnahme auf Figuren näher erläutert, dabei zeigen schematisch und beispielhaft
- Figur 1: Pleuel mit Tariermasse und Gegenhärtezone am Pleuelfuß,
- Figur 2: Pleuel mit Tariermasse und Gegenhärtezonen am Pleuellagerdeckel,
- Figur 3: Pleuel mit Tariermasse und Gegenhärtezonen an Pleuelfuß und Pleuellagerdeckel,
- Figur 4: Pleuel mit Gegenhärtezonen an Pleuelfuß und Pleuellagerdeckel,
- Figur 5: Pleuel mit durch Beschichtung integrierter Lagerfläche und Gegenhärtezonen am Pleuellagerdeckel und
- Figur 6: Pleuel mit durch Beschichtung integrierter Lagerfläche und Gegenhärtezonen am Pleuellagerdeckel.

Die Figuren zeigen jeweils das große Lagerauge eines Pleuels 100, 200, 300, 400, 500, 600 einer hier nicht näher dargestellten Brennkraftmaschine. Die Pleuel 100, 200, 300 weisen jeweils eine Tariermasse 108, 208, 308 auf.

Vorliegend ist das Pleuel 100, 200, 300, 400, 500, 600 im Schmiede-, Sinter-oder Sinter-Schmiede-Verfahren hergestellt und besteht aus einem Eisenwerkstoff mit einem Kohlenstoffgehalt von wenigstens 0,3 %, insbesondere von 0,3 bis 0,8 %, beispielsweise aus C 70. Maßgeblich ist, dass zu beschichtende oder zu vergütende Bereiche den genannten Kohlenstoffgehalt aufweisen, sodass gegebenenfalls das Pleuel 100, 200, 300, 400, 500, 600 auch Bereiche umfassen kann, welche einen abweichenden Kohlenstoffgehalt aufweisen.

Das Lagerauge ist mit einer durch Vergütung zumindest seiner Innenfläche gebildeten Funktionsauflage 106, 206, 306, 406 versehen, wobei die Vergütung eine Randschichthärtung mittels Wärmebehandlung umfasst. In einem bevorzugten Ausführungsbeispiel erfolgt die Vergütung insbesondere im Rahmen einer Großserienfertigung kostengünstig bei hoher, gleichbleibender Qualität durch Laser- oder Induktionshärten und anschließendes Anlassen. Es wird eine harte Randschicht mit einer Härte von wenigstens 50 HRC, insbesondere von ca. 54 - 58 HRC erzeugt.

Alternativ ist das Lagerauge mit einer durch Beschichtung seiner Innenfläche gebildeten Funktionsauflage 506, 606 versehen, wobei die Beschichtung lasergestützt, beispielsweise mittels eines Laser-Pulver-, Laser-Draht- oder Laser-Schmelze-Verfahrens, aufgebracht wird. Zwischen dem Pleuelgrundwerkstoff und einem die Funktionsauflage 506, 606 bildenden Zusatzwerkstoff wird dabei ein stoffschlüssiger Verbund gebildet. Die Funktionsauflage 506, 606 ist kupferbasiert und umfasst, insbesondere bei auf der Kurbelwelle gleitgelagerten Pleueln, beispielsweise eine Kupfer-Zink-(CuZn), Kupfer-Zinn- (CuSn), Kupfer-Bismut- (CuBi) oder Kupfer-SilberLegierung (CuAg), gegebenenfalls mit Beimengung weiterer Legierungselement sowie üblichen Verunreinigungen. Vorliegend ist eine CuZn31Si1-Beschichtung aufgebracht. Gemäß eines anderen Ausführungsbeispiels kann die Funktionsauflage 506, 606 auch eine zinn-, z.B. SnₓSbₓCu_{y}, oder aluminiumbasierte Legierung umfassen. Die erzeugte Schichtdicke beträgt ca. 0,5 - 2 mm, welche im Rahmen einer nachfolgenden Fertigbearbeitung auf ca. 0,15 - 0,3 mm reduziert wird. In einem weiteren Ausführungsbeispiel, insbesondere bei auf der Kurbelwelle wälzgelagerten Pleueln, ist die Funktionsauflage 506, 606 eine Hartstoffschicht mit einer Härte von wenigstens 55 HRC, deren Zusammensetzung 1,2 Gew.-% Kohlenstoff (C), 4,5 Gew.-% Chrom (Cr), 5,5 Gew.-% Wolfram (W), 4 Gew.-% Vanadium (V), Rest Eisen (Fe) oder Cobalt-Basislegierung wie Stellit umfasst. Die erzeugte Schichtdicke beträgt ca. 1,5 - 3 mm, welche im Rahmen einer nachfolgenden Fertigbearbeitung auf ca. 0,7 - 1,5 mm reduziert wird.

Durch Bruchtrennen entlang der Ebene 110, 210, 310, 410, 510, 610 ist vom Pleuelfuß 102, 202, 302, 402, 502, 602 ein Pleuellagerdeckel 104, 204, 304, 404, 504, 604 trennbar. Beim Bruchtrennen des vergüteten und/oder beschichteten Pleuels 100, 200, 300, 400, 500, 600 werden die beim Vergüten und/oder Beschichten, insbesondere aufgrund der damit einhergehenden Martensitbildung bzw. durch die Erstarrung und Schrumpfung des Lagerwerkstoffs eingebrachten Spannungen frei.

Damit die einzelnen Komponenten des bruchgetrennten Bauteils, der Pleuelfuß 102, 202, 302, 402, 502, 602 und der -deckel 104, 204, 304, 404, 502, 602, nach dem Bruchtrennen nicht unterschiedlich stark "auffedern", werden vor dem Bruchtrennen gezielt Gegenspannungen zu den bei der Vergütung und/oder Beschichtung, eingebrachten Spannungen eingebracht, indem das Bauteil in vorbestimmten Bereichen partiell wärmebehandelt wird. Vorliegend sind vor dem Bruchtrennen die Steifigkeiten mittels Gegenhärtezonen 112, 212, 214, 312, 314, 316, 412, 414, 514, 614, 618, 620 an Pleuelfuß 102, 202, 302, 402, 502, 602 und/oder Pleuellagerdeckel 104, 204, 304, 404, 504, 604 angeglichen.

Erforderliche Art, Lage und Abmessung der Gegenhärtezonen 112, 212, 214, 312, 314, 316, 412, 414, 514, 614, 618, 620 werden rechnerisch anhand eines virtuellen Modells ermittelt. Gemäß eines anderen Ausführungsbeispiels werden die an die die Gegenhärtezonen 112, 212, 214, 312, 314, 316, 412, 414, 514, 614, 618, 620 gestellten Erfordernisse empirisch mittels Bruchtrennen von Referenzbauteilen ohne Gegenhärtezonen vor dem Bruchtrennen zur gezielten Einbringung von Gegenspannungen ermittelt.

Die Einbringung der Gegenhärtezonen 112, 212, 214, 312, 314, 316, 412, 414, 514, 614, 618, 620 erfolgt mittels Laser- oder induktiver Härtung, alternativ Umformzonen.

Alternativ wird nach dem Bruchtrennen der Betrag der Auffederung bestimmt und dementsprechend gegengerichtete Spannungen durch Umformprozesse wie kalt Kalibrieren, Nadeln, Walzen (Rollieren), Taumeln eingebracht oder Härtung der Planflächen

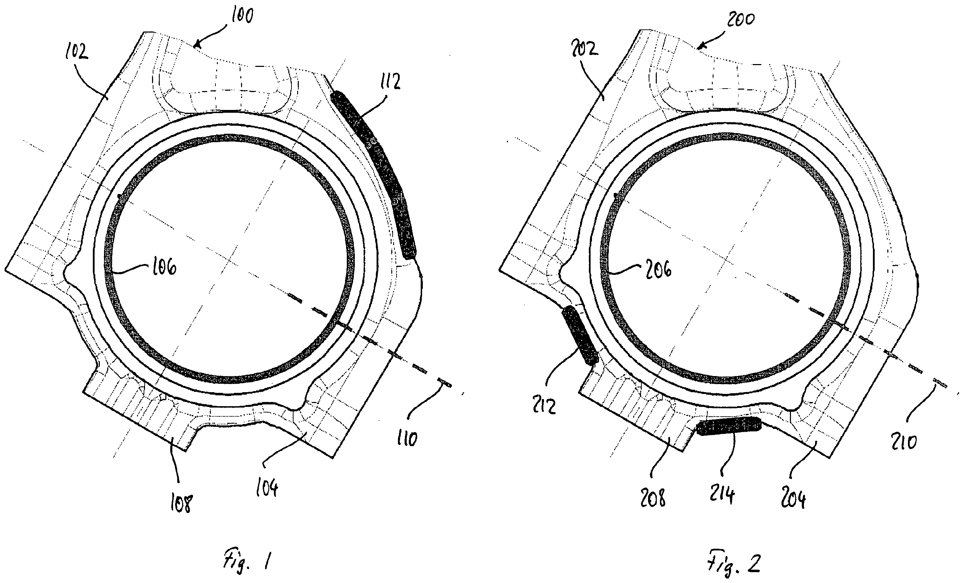

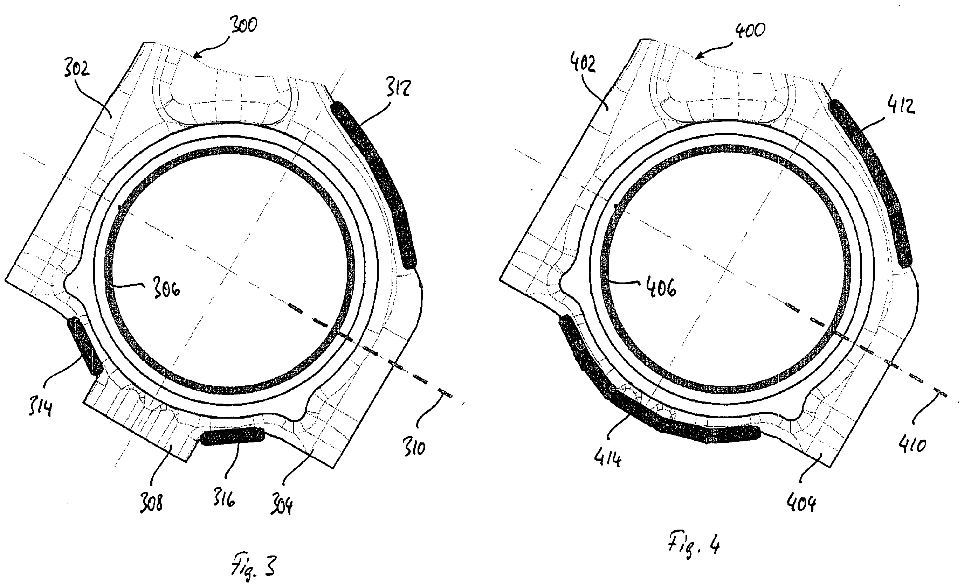

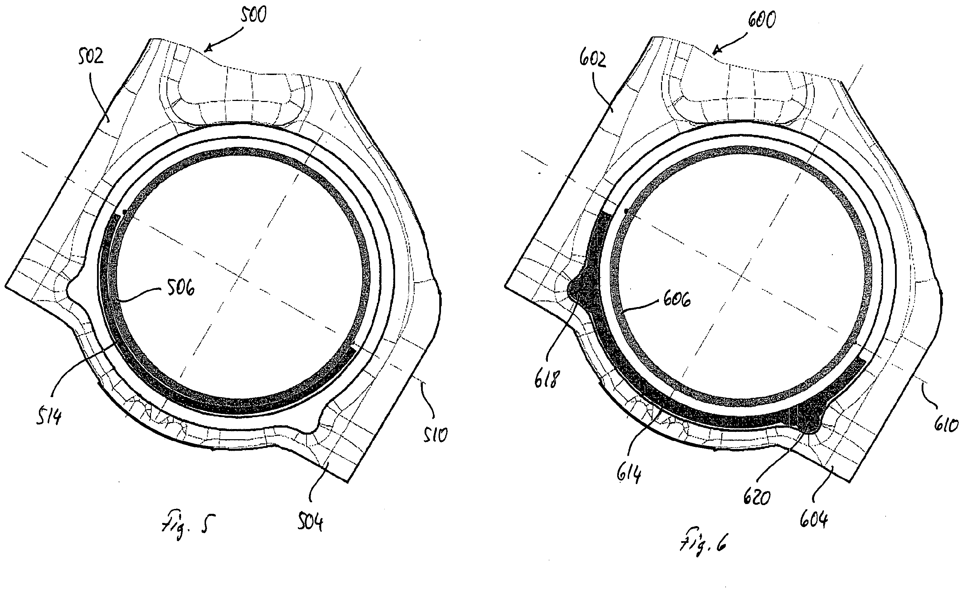

Figur 1 zeigt ein Pleuel 100 mit Gegenhärtezone 112 am Pleuelfuß 102, Figur 2 ein Pleuel 200 mit Gegenhärtezonen 212, 214 am Pleuellagerdeckel 204 seitlich der Tariermasse 208, Figur 3 ein Pleuel 300 mit Gegenhärtezonen 312, 314, 316 am Pleuelfuß 302 und am Pleuellagerdeckel 304 seitlich der Tariermasse 308, Figur 4 zeigt ein Pleuel 400 mit Gegenhärtezonen 412, 414 an Pleuelfuß 402 und mittig durchgehend am Pleuellagerdeckel 414, Figur 5 zeigt ein Pleuel 500 mit einer durch Beschichtung integrierten Lagerfläche 506 und einer in unmittelbarer Nähe der Lagerbeschichtung 506 angeordneten Gegenhärtezone 514 am Pleuellagerdeckel 504 und Figur 6 zeigt ein Pleuel 600 mit einer durch Beschichtung integrierten Lagerfläche 606 und einer von der Lagerbeschichtung 606 etwas beabstandeten Gegenhärtezone 514 mit zwei erweiterten Bereichen 618, 620 am Pleuellagerdeckel 504.

In einem auf die Vergütung und/oder Beschichtung sowie die Etablierung der Gegenhärtezonen 112, 212, 214, 312, 314, 316, 412, 414, 514, 614, 618, 620 folgenden Schritt wird durch Bruchtrennen - Cracken - der Pleuellagerdeckel 104, 204, 304, 404, 504, 604 vom Pleuelfuß 102, 202, 302, 402502, 602 getrennt, wobei zuvor pleuellagerinnenseitig entlang der Bruchtrennebene eine Schwächungslinie ausgebildet wird.

Die Schwächungslinie wird durch oberflächennahe und mittels in Reihe über Stege gegenseitig beabstandet angeordnete Vertiefungen ausgebildet und zwar in einem spröden Werkstoffbereich zur Erzielung einer bruchkraftabhängigen Rissauslösung in den Stegen. Da die Gesamtheit der Stege eine kürzere Länge ergibt als die Länge bzw. Breite der jeweiligen Lageranordnung bzw. des Bauteiles, ergibt sich bei einer Brucheinleitung der Umstand, dass durch die eingebrachte Bruchtrennkraft in der durch die Stege verkürzten Schwächungslinie zunächst Starterrisse erzeugt werden, die für die weitere Bruchtrennung ausschlaggebend sind.

Zur Vereinfachung des Bruchtrennverfahrens wird der spröde Werkstoffbereich bei einer thermisch stoffschlüssigen Verbindung zwischen einem Grundwerkstoff des Bauteiles bzw. der Lageranordnung und einem als Funktionsauflage dienen den Zusatzwerkstoff als eine spröde Mischphase erzeugt, wobei die Erkenntnis zugrunde liegt, dass die spröde Mischphase mittels eines energiereichen Strahles, wie z. B. eines Lasers, beim Schmelzen des Bauteil-Grundwerkstoffes und gleichzeitigem Aufschmelzen des als Funktionsauflage dienenden Zusatzwerkstoffes erzeugt wird.

Zur Erzielung kurzer Stege zur Ausbildung von Starterrissen bei Aufbringung einer Bruchtrennkraft werden mittels eines energiereichen Strahles sacklochartige Vertiefungen ausgebildet und zwar derart, dass diese die spröde Mischphase durchsetzen oder alternativ durchtrennen.

Das Verfahren findet bevorzugt Anwendung zur Anordnung einer Gleitlagerschicht als Funktionsauflage in einer Lageranordnung eines Pleuels, wobei mit der Bruchtrennung einer als Pleuelauge gestalteten Lageranordnung die Gleitlagerschicht ebenfalls bruchgetrennt ist. Der Gleitlagerwerkstoff bildet mit dem Eisenwerkstoff die genutzte spröde Mischphase.

In einer Lageranordnung aus einem Eisenwerkstoff bildet sich während der thermisch stoffschlüssigen Verbindung des als Funktionsauflage dienenden Zusatzwerkstoffes und des Grundwerkstoffes bzw. des Eisenwerkstoffes unterhalb der spröden Mischphase eine wärmeabhängig duktil gewordene Martensit-Schicht aus, die einer zügigen Rissfortleitung entgegenwirkt. Um diese ohne zusätzliche Maßnahmen zu überwinden wird vorgeschlagen, dass mittels eines Strahles, insbesondere Laserstrahles, zur Ausbildung der Schwächungslinie erzeugte sacklochartige Vertiefungen die Gleitlagerschicht sowie die spröde Mischphase durchsetzend in die anschließende, wärmeabhängig duktil gewordene Martensit-Schicht verlängert sind, wobei der Energieeintrag durch den jeweiligen Strahl so gewählt ist, dass die Abschnitte der Vertiefungen im duktilen Martensit von einer mit der spröden Mischphase in Verbindung stehenden versprödeten Martensit-Schicht begrenzt sind. Diese die Abschnitte der sacklochartigen Vertiefungen begrenzenden versprödeten Martensit-Schichten dienen in Verbindung mit den in der spröden Mischphase ausgebildeten Stegen der Ausbildung von Starterrissen einerseits und der Fortleitüng derartiger Starterrisse andererseits in der duktilen Martensit-Schicht.

Der jeweiligen Lager-Legierung mit einem Hauptanteil an Kupfer können Beimengungen an Eisen oder Mangan oder Silizium zugesetzt sein, die die Versprödung zusätzlich unterstützen. Die vorbeschriebene Auswahl an Gleitlager-Werkstoffen ist so getroffen, dass durch zumindest eine Legierungskomponente die Bildung der spröden Mischphase in allen vorgenannten Lageranordnungen unterstützt ist, was gegebenenfalls durch eine entsprechende Gasatmosphäre beim Aufschmelzen des jeweiligen Lagerwerkstoffes eine zusätzliche Unterstützung finden kann.

Bei wälzgelagerten Komponenten liegen die Schwächungslinien im Pleuellager und somit die Trennebene in einer gegenüber der Achse des Pleuelauges um den Winkel α geneigten Ebene, sodass ein weitgehend stoßfreies bzw. stoßarmes Überrollen der Trennfuge ermöglich ist. Vorliegend beträgt der Winkel α wenigstens 3°. Mit der zur Pleuelaugenachse geneigten Trennfuge wird kostengünstig und auf einfache Weise eine wesentliche Verbesserung der Dauerhaltbarkeit erreicht. Bei gleitgelagerten Komponenten wird vorzugsweise ein Neigungswinkel von 0° gewählt.

Aufgrund der Gegenhärtezonen (Umformzonen) 112, 212, 214, 312, 314, 316, 412, 414, 514, 614, 618, 620 an Pleuelfuß 102, 202, 302, 402, 502, 602 und/oder Pleuellagerdeckel 104, 204, 304, 404, 504, 604 sind die Spannungen im Pleuel 100, 200, 300, 400, 500, 600 so verteilt, dass beim bzw. nach dem Bruchtrennen die einzelnen Komponenten des Bauteils, der Pleuelfuß 102, 202, 302, 402, 502, 602 und der -deckel 104, 204, 304, 404, 504, 604, nicht unterschiedlich stark sondern zumindest annähernd gleichermaßen "auffedern", sodass die Komponenten ohne Richten oder Montagehilfen einwandfrei fügbar sind und ein seitlicher Stoß vermieden ist. Damit ist der Prozess reproduzierbar und die Funktionssicherheit des Bauteils gegeben.

Nach dem Bruchtrennen des Bauteils kann eine Fertigbearbeitung, umfassend eine Reinigung, Planschleifen und/oder Honen, erfolgen.

Auch wenn vorliegend die Erfindung anhand eines Pleuels einer Brennkraftmaschine dargestellt ist, kann sie auch bei einem Lager einer Welle, insbesondere Kurbelwelle, Nockenwelle oder Zwischenwelle einer Brennkraftmaschine genutzt werden.

## Patentansprüche

1. Verfahren zur Herstellung eines bruchgetrennten Bauteils (100, 200, 300, 400, 500, 600) aus einem Kohlenstoffstahl umfassend eine zumindest bereichsweise Vergütung und/oder Beschichtung, wobei Spannungen eingebracht werden, **gekennzeichnet durch** eine partielle Wärmebehandlung vor dem Bruchtrennen zur gezielten Einbringung von Gegenspannungen oder Umformung, um ein Auffedern einzelner Komponenten des Bauteils nach dem Bruchtrennen zu beeinflussen.

2. Verfahren nach Anspruch 1, **dadurch gekennzeichnet, dass** die partielle Wärmebehandlung in vorbestimmten Bereichen (112, 212, 214, 312, 314, 316, 412, 414, 514, 614, 618, 620) erfolgt.

3. Verfahren nach Anspruch 2, **dadurch gekennzeichnet, dass** die vorbestimmten Bereiche (112, 212, 214, 312, 314, 316, 412, 414, 514, 614, 618, 620) rechnerisch anhand eines virtuellen Modells ermittelt werden.

4. Verfahren nach Anspruch 2, **dadurch gekennzeichnet, dass** die vorbestimmten Bereiche (112, 212, 214, 312, 314, 316, 412, 414, 514, 614, 618, 620) empirisch mittels Bruchtrennen von Referenzbauteilen ohne partielle Wärmebehandlung vor dem Bruchtrennen zur gezielten Einbringung von Gegenspannungen ermittelt werden.

5. Verfahren nach Anspruch 1, **dadurch gekennzeichnet, dass** das bruchgetrennte Bauteil (100, 200, 300, 400, 500, 600) ein Pleuel einer Brennkraftmaschine oder Lager einer Kurbelwelle, Nockenwelle oder Zwischenwelle, einer Brennkraftmaschine ist.

## Claims

1. A method for producing a cracked component (100, 200, 300, 400, 500, 600) from a carbon steel comprising quenching and tempering and/or coating at least in regions, wherein stresses are introduced, **characterised by** a partial heat treatment prior to the cracking for the targeted introduction of counter-stresses or deformation, in order to influence spring-back of individual components of the component after the cracking.

2. A method according to Claim 1, **characterised in that** the partial heat treatment takes place in predetermined regions (112, 212, 214, 312, 314, 316, 412, 414, 514, 614, 618, 620).

3. A method according to Claim 2, **characterised in that** the predetermined regions (112, 212, 214, 312, 314, 316, 412, 414, 514, 614, 618, 620) are determined by computation using a virtual model.

4. A method according to Claim 2, **characterised in that** the predetermined regions (112, 212, 214, 312, 314, 316, 412, 414, 514, 614, 618, 620) are determined empirically by means of cracking of reference components without partial heat treatment prior to the cracking for the targeted introduction of counter-stresses.

5. A method according to Claim 1, **characterised in that** the cracked component (100, 200, 300, 400, 500, 600) is a connecting rod of an internal combustion engine or bearing of a crankshaft, camshaft or intermediate shaft, of an internal combustion engine.

## Revendications

1. Procédé de fabrication d'un composant séparé par rupture (100, 200, 300, 400, 500, 600) en un acier au carbone comportant au moins par zones une amélioration de structure et/ou un revêtement, des tensions étant introduites,
**caractérisé par**
un traitement thermique partiel avant la séparation par rupture pour permettre l'introduction ciblée de tensions antagonistes ou de déformations pour permettre d'influer sur une détente de constituants individuels du composant après la séparation par rupture.

2. Composé conforme à la revendication 1,
**caractérisé en ce que**
le traitement thermique partiel est effectué dans des zones prédéfinies (112, 212, 214, 312, 314, 316, 412, 414, 514, 614, 618, 620).

3. Composé conforme à la revendication 2,
**caractérisé en ce que**
les zones prédéfinies (112, 212, 214, 312, 314, 316, 412, 414, 514, 614, 618, 620) sont déterminées par calcul à partir d'un modèle virtuel.

4. Procédé conforme à la revendication 2,
**caractérisé en ce que**
les zones prédéfinies (112, 212, 214, 312, 314, 316, 412, 414, 514, 614, 618, 620) sont déterminées de manière empirique par séparation par rupture de composants de référence sans traitement thermique partiel avant la séparation par rupture pour permettre l'introduction ciblée de tensions antagonistes.

5. Procédé conforme à la revendication 1,
**caractérisé en ce que**
le composant séparé par rupture (100, 200, 300, 400, 500, 600) est une bielle d'un moteur à combustion interne ou un palier d'un vilebrequin, d'un arbre à came ou d'un arbre intermédiaire d'un moteur à combustion interne.
